# EUROPEAN PATENT SPECIFICATION

(11) **EP 3 156 856 B1**
(45) Date of publication and mention of the grant of the patent: **17.06.2020**
(21) Application number: 15002934.6
(22) Date of filing: 15.10.2015
(51) Int. Cl.: G05B 15/02

(54) **BUILDING AUTOMATION FOR A BUILDING WITH TECHNICAL DEVICES IN PHYSICAL ZONES, USING A DATA STRUCTURE WITH DEVICE-TO-ZONE ASSIGNMENT OBTAINED BY IMAGE PROCESSING**
GEBÄUDEAUTOMATION FÜR EIN GEBÄUDE MIT TECHNISCHEN VORRICHTUNGEN IN PHYSIKALISCHEN ZONEN UNTER VERWENDUNG EINER DATENSTRUKTUR MIT VORRICHTUNG-ZU-ZONE-ZUWEISUNG DURCH BILDVERARBEITUNG
AUTOMATISATION DE BÂTIMENT DE CONSTRUCTION AVEC DES APPAREILS TECHNIQUES EN ZONES PHYSIQUES, AU MOYEN D'UNE STRUCTURE DE DONNÉES À AFFECTATION DISPOSITIF VERS ZONE OBTENUE PAR TRAITEMENT D'IMAGE

(43) Date of publication of application: 19.04.2017
(73) Proprietor: ABB Schweiz AG, 5400 Baden (CH)
(72) Inventor: Gamer, Thomas, 68782 Brühl (DE); Kantz, Florian, 64404 Bickenbach (DE); Durdik, Zoya, 69469 Weinheim (DE)
(74) Representative: Marks, Frank

(56) References cited:
- US-A1- 2013 184 887

## Description

### Technical Field

The present invention generally relates to industrial engineering used for building automation, and more particularly, to a building automation system (BAS) and to a method that uses image processing to obtain data that is used during planning, engineering, commissioning, and operation of the building.

### Background

Building automation relates to all kinds of buildings, such as residential buildings (e.g. apartment houses), commercial buildings (e.g., shops, department stores, office buildings, and hospitals), state-run buildings (e.g., barracks, penitentiaries), industrial buildings (e.g., plants, factories, warehouses) and so on. Building automation systems (BAS) control the technical equipment that is associated with the building. The association can be such that equipment is located inside the buildings or that equipment is directly attached to the buildings. Technical equipment includes technical devices for heating, cooling, air-conditioning, lighting, fire monitoring, access controlling (e.g., door controllers), generating electricity (e.g., solar panels on the roof), supervising (e.g., Closed Circuit Television CCTV or video surveillance, inside or outside the building) and includes other technical appliances. Technical devices are usually powered by electricity, but this is not necessary. Technical devices also include furniture, installation ducts, cable trays or other equipment. Some of the technical devices are present in the building only temporarily, such as portable heaters. Some of the devices are visible only during construction of the building, such as cable channels that are being covered by wall plaster.

The BAS can be a system that is distributed over sub-systems. Taking lighting as an example, lighting devices not only include light actuators, light switches and lamps but also devices that determine the need for light, such as light sensors, light meters, person presence sensors and so on. The BAS could have an overall function that estimates particular lighting requirements, for example, based on a measurement of sun-light, and could have sub-systems that activate or deactivate a device (e.g., switch it on or off) depending on the presence or absence of persons in particular rooms.

However, building automation relies on input data. Such input data represents, for example, the structure of the building and the current or future configuration of the building with technical devices. The input data can be obtained through industrial engineering that relies on documentation and other sources of information. As the documentation is usually available in the form of drawings and texts, obtaining the input data can face challenges or obstacles, such as media breaks, data incompleteness or data incompatibility.

For example, for data that is available in computer-readable form, such as data from CAD (computer-aided design) systems, the data can have a structure that is adapted to one system only. Such limitations are typical for so-called proprietary data formats. Such data may not be suitable to be input data (for BAS engineering) because the data can be incompatible.

Such and other challenges can occur alone or in combination, and can become more severe when humans interfere. Usually, the persons who provide and use the documentation are specialists. Simplified, there are so-called engineering consultants responsible for the building during the design phase, and so-called mechanical integrators, electrical integrators or system integrators responsible for installation and commissioning of technical devices inside the building at later phases.

The consultants and integrators use computers, but the specialization leads to the use of different software. Software might be incompatible, especially in the hand-over between the phases. For example, the integrators may use a computer that shows an electronic copy of the drawings (e.g., a floor plan) in the background of a user interface. The integrators may then place iconic symbols for zones (e.g., rooms) and devices over this background. The placement of device icons over certain regions of the picture leads to a manual device-to-zone assignment, but this assignment would have to be processed manually. Manual processing - even with the assistance of computers - can lead to incorrect documentation. Incorrect documentation (in the form of drawings and/or books) can prevent the BAS to operate correctly. In such situations, the BAS would not control the technical equipment properly. US2013184887 discloses a system and method for managing energy.

### Summary

According to embodiments of the present invention, a building automation system (BAS) processes an image that is related to a plane of a building. The BAS identifies the assignment of technical devices to zones inside the plane and provides a data structure. The data structure represents that device-to-zone assignment. The BAS thereby re-establishes the device-to-zone assignment from the image. The BAS then uses the data structure to control the operation of the technical devices within the building. The plane of the building can be a floor, and the zones can be the rooms on that floor. In an alternative, the plane of the building can be the facade, and the zones can be rooms or windows.

The image can be a scan, picture or photo from a drawing of that plane, such as the scan of a floor drawing. The image can also be taken from a CAD-system that is used by the architects or engineering consultants of the building. Commonly used formats for images and pictures are ".jpg", ".png", ".gif", ".bmp", ".tiff", or others.

The data structure comprises a hierarchical arrangement that has a first layer with first data elements and that has a second, sub-ordinated layer with second data elements. The first data elements represent (i.e. stand for) particular zones - such as the rooms. The second data elements represent particular technical devices that are located inside the zones. The term "are located" is understood to include the past (i.e., a physical device was located in the zone, but has been removed; there was a plan to locate a device), the present (i.e., the physical device is currently located in the zone; there is a plan to locate a device), and the future (i.e., there are plans to locate a device).

In the data structure, assignment elements indicate the device-to-zone assignments. The assignment direction "device-zone" is an illustrative convention that can be reversed. There are assignments from particular second data elements (i.e., representing devices) to particular first data elements (i.e. representing zones).

To obtain the data structure, the BAS comprises an image-to-data converter. The image-to-data converter comprises a receiver component to receive the image, a recognition component to identify lines and symbols on the image in combination with coordinates of the lines and symbols within the image, and a mapper component that processes the identified lines and symbols. The recognition component also identifies the coordinates of the lines and symbols so that the mapper component uses the coordinates to identify the device-to-zone assignment.

This approach addresses the above-mentioned challenges. For example, in case of incompatible data formats, semantic information (from the drawings and/or from the CAD-system, such as the assignment) can be re-established into the data structure.

The image-to-data converter can modify the data structure by adding, deleting or changing elements. A modified data structure represents the building more accurately. This improves the control of the technical devices inside the building by the BAS. For the modifications, the image-to-data converter uses optional components to recognize textual descriptors (or annotations) and to detect similarities.

Optionally, the recognition component can comprise an annotation recognizer that is adapted to identify the annotations in the image. The annotations are associated with the zones or devices and can be included in the data structure. This approach can be advantageous to reestablish lost annotations. Since the original wording is maintained, human operators can understand the annotations.

The accuracy of the data structure and hence the control of the building is enhanced by similarity detection to modify the data structure. Similarity can be detected for devices and zones in the building, as well as for lines and symbols (and annotations) in the drawings and images. The image-to-data converter detects similarity in at least some elements of the data structure, or within the data that is used to obtain the data structure (intermediate data). For the detection, the image-to-data converter uses pre-defined rules that reflect typical situations that can be observed in buildings, in drawings, and in images.

For example, the image-to-data converter can complement sequences of alphanumeric annotations for zones (or devices) where annotation is missing (in the drawing or image). This is applicable for sequences with a missing annotation at the beginning or at the end (e.g., A, B, C with "D" missing), or for sequences with a missing annotation somewhere else (e.g., A, B, D, E with "C" missing).

Similarity detection and annotation recognition can also be used to provide templates for data structures, for example, in the sense that a particular floor has rooms each having a particular number and arrangement of devices.

A method for configuring a building automation system for a building with physical separators that divide a particular plane of the building into zones comprises steps that describe the operation of the image-to-data converter.

### Brief Description of the Drawings

FIGS. 1A and 1B illustrate a building with zones and technical devices under control of a building automation system (BAS) as well as a machine-readable data structure that indicates an assignment of particular technical devices to particular zones;
FIG. 2 illustrates an image-to-data converter that belongs to the BAS and that is adapted to analyze technical devices in a building and to provide the data structure;
FIG. 3 illustrates the image-to-data converter with more details of a recognition component;
FIG. 4 illustrates further aspects of the image-to-data converter, especially for processing images from drawings that include annotations for the zones and/or for the technical devices;
FIG. 5 illustrates further aspects of the image-to-data converter, especially for processing images from drawings that are incomplete, so that a similarity component completes missing annotations;
FIG. 6 illustrates further aspects of the image-to-data converter, especially, for processing images from drawings in that show symbols for devices in location in relations to the zones;
FIG. 7 illustrates further aspects of image-to-data converter, especially, for processing images from drawings that use symbols from an historic domain;
FIGS. 8A and 8B illustrate the data structure by way of example;
FIGS. 9A, 9B and 9C illustrate further examples for drawings and corresponding data structures; and
FIG. 10 illustrates a method flow chart diagram of a method for configuring a building automation system.

### Detailed Description

### (Introduction)

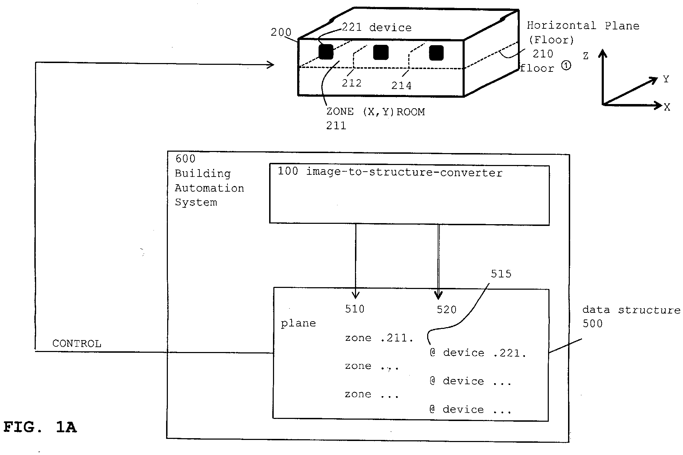

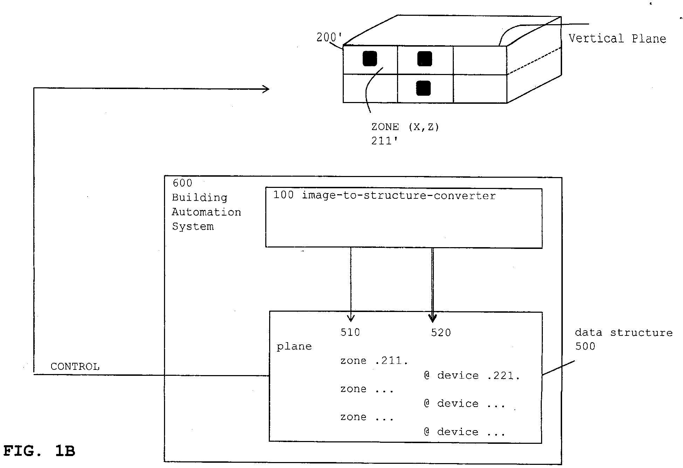

FIGS. 1A and 1B illustrate building 200/200' with zones and technical devices under control of building automation system 600 (BAS 600) as well as machine-readable data structure 500.

Data structure 500 comprises device data. Device data is data that can be required to control the technical devices in building 200. Examples are given as follows: **Location data** is data that represents the location of a particular device inside the building. **Assignment data** is data that represent an assignment of particular devices to particular rooms, such as the presence (or absence) of particular devices in particular rooms (device-to-zone assignment). **Type data** is data that represents a type of a particular device. The type indicates a structure of the device, and/or a function of the device. **Identification data** is data that represents a particular device usually within a plurality of devices. **Operational status data** is data that represents a particular state of a particular device within a set of possible states. **Safety data** is data that relates to potential hazards that can be related to the devices.

In FIGS. 1A and 1B, building 200/200' is shown in a perspective view with coordinate axes X, Y, and Z. The coordinates are used to virtually cut the building into planes. FIG. 1A focuses on horizontal planes (XY-planes) and FIG. 1B focuses on vertical planes (XZ-planes). Other planes (or structures, or coordinates) could be defined as well. The coordinates represent locations within the building.

As in FIG. 1A, a particular Z-coordinate defines a particular XY-plane (or horizontal plane, e.g., the particular floor 210) with separators (e.g., walls, doors) that define particular zones inside the XY-plane (e.g., room 211). Simplified, the figure illustrates that two walls (e.g., walls 212 and 214) and the outer walls of building 200 separate floor 210 into 3 rooms (e.g., room 211). However, the number of separators and zones can vary. Predefined rules can define how to identify a particular zone type. For example, a zone having a single door can be classified as a standard room, and a zone having multiple doors can be classified as a hallway. The rules are based on semantic information on how buildings typically look like.

As in FIG. 1B, in building 200', a particular Y-coordinate defines a particular XZ-plane (or vertical plane, e.g., the facade of the building) with separators (e.g., frames) that define particular zones inside the XZ-plane (e.g., windows).

The building comprises technical devices (illustrated by black squares) located in the particular zones. For example, building 200 has devices (e.g., desks) in all 3 rooms of floor 210; building 200' has devices (e.g., window shutters, jalousies) in some of the windows. In other words, there is an assignment of particular devices to particular zones. This device-to-zone-assignment is available in data structure 500 that is used by BAS 600 to control the devices within building 200/200'.

Data structure 500 is provided by image-to-data converter 100 that is illustrated to be part of BAS 600. Providing data structure 500 is an industrial engineering activity that relies on documentation of building 200/200'. Documentation is required for a number of reasons, such as practical reasons (e.g., to allow a person to simulate different options, to efficiently construct the building and equip it with devices), safety reasons (e.g., to provide for emergency information), legal reasons (e.g., to obtain a construction permit) and others.

A first type of documentation is a drawing showing a map or plan. The drawing represents the building or parts of it. For example, a drawing of a building is a building plan. Usually, the building plan is accompanied by multiple drawings of the floors that are floor plans. The plans can be views-from-above (XY-plan, e.g., floor plan), or front view (XZ-plane, e.g., the facade of the building). Such drawings illustrate technical devices for installation, replacement, repair etc. within the floor of the building by symbols. The symbols are usually standardized.

A second type of documentation is a room book that also represents (parts of) the building but has the focus on textual description. The room book can be used to track the inventory, but also to calculate technical parameters in the relation to the devices (e.g., to calculate overall power consumption).

The documentation can take the granularity (or separation of planes into zones) into account: there are building drawings or building books (i.e., drawings/books of the complete building), floor drawings/books, room drawings/books etc.

The documentation can date from the time the building was constructed (historic documentation), and there is documentation for new buildings to be constructed or for existing buildings to be modernized (in the so-called planning and design phases). Frequently, historic documents are limited to (historic) drawings.

Data structure 500 can be regarded as extracted information (or data) from the drawings (or from building/room books) into BAS 600 in electronic form. The information in data structure 500 is available at a granularity that takes the technical devices into account separately. The documentation can include annotations for each device. Annotations indicate an identification (e.g., equipment or device number), a type (e.g., lighting by light-emitter diodes LES), technical parameters (e.g., voltage or illuminance) and other information (cf. type data, identification data, operational status data etc.). The annotations can be available, for example, as text or as symbols on a drawing, or can be available as separate data sets (e.g., meta-data).

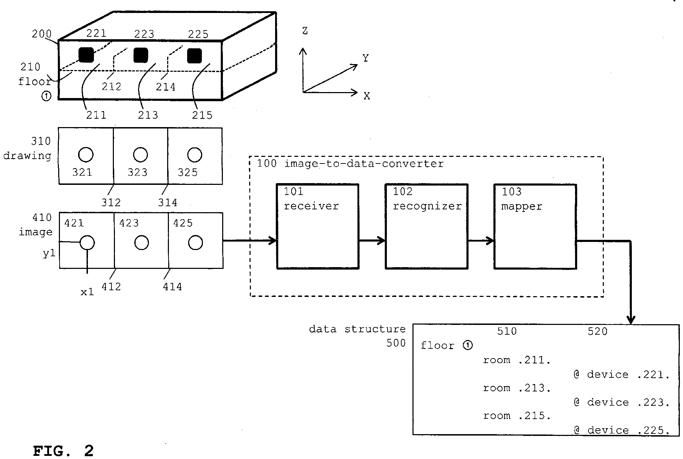

The description will explain details for image-to-data converter 100 with reference to FIGS. 2-10. For illustration, some of the challenges to be resolved by BAS 600 are summarized as follows:
(i) **Media Breaks.** There are many situations in that the original documentation is only available as a paper drawing. Scanning an original drawing can require special hardware, such as scanners for DIN A0 or DIN A1 formats. Scanning or digitally photographing the drawing adds further media breaks (paper/image/data). Image data can be available in pixel raster formats such as .jpg and .png.
(ii) **Incompatible Data.** Documentation is usually made by CAD. An example is the architecture software "ArchiCAD" that is commercially available. In the original CAD-format, the drawings are already available in electronic form and the drawings can be accompanied by the annotations, at a required granularity (e.g., data for each device). But the electronic form might be incompatible with the engineering system so that the only data available is the image in the pixel raster format.
(iii) **Human User Only.** Drawings in pixel raster format indicate the device-to-zone assignments and annotations recognizable for a human user, but not for a computer that has to further process the assignments/annotations. There may be no data structure available that -would allow further processing.
(iv) **Defective Documents.** Documentation might be defective at least partly. For example, a paper drawing that was stored in an archive over decades might have lost its original color. Additional processing steps can be performed by the scanner, the digital camera, separate image processing computers etc. Such steps comprise image enhancing, to increase the contrast or to modify the white balance. Mobile devices such as portable computers, mobile phones ("Smartphone") can have a built-in camera and can operate in a pre-configured picture mode to immediately process pictures. However, such steps can lead to errors within the image that lead to inaccuracies in subsequent image processing. For example, image recognition may incorrectly recognize characters or symbols.
(v) **Historic Documents.** Technical devices are in continuous development over time so that - especially in case of historic plans - symbols and other conventions in the documentation can be non-compatible with the conventions in a modern engineering system. For example, historic drawings might show computers with cathode ray tube (CRT) displays as large squares in view-from-above. To provide for the same function, such displays are being replaced by liquid crystal display (LCD) monitors, thin lines only. Or, in a different example, safety requirements increase over time. As an example, modern buildings are to be equipped with a kind of hazard detection devices, such as fire detectors. Such devices are potentially not visible on historic plans.

### (Data structure details)

Data structure 500 is indicative of the device-to-zone assignment. Data structure 500 has an hierarchical arrangement with at least first layer 510 with first data elements representing the particular zones (cf. the plain arrows) and has at least second, sub-ordinated layer 520 with second data elements representing the particular technical devices that are located inside the zones (cf. the double-arrows), and assignment elements 515 (e.g., the @-symbols as assignment elements) from particular second data elements to particular first data elements, corresponding to the device-to-zone assignments. Further layers can be used as well. In other words, layer 520 can be sub-ordinated to layer 510 through intermediate layers.

Data structure 500 can include alphanumeric characters (that are processed by BAS 600) that include identification at the technical level. In the figures, such identification is by the references numbers inside dots (e.g., ".221."). In the example of FIG. 1, data structure 500 shows the assignment of device 221 to zone 211 (e.g., by @-signs), and shows other assignments that are simplified by ellipsis.

From a different perspective, data structure 500 is a tree with nodes (the elements layers 510, 520) and edges (assignment elements, @ in the figure).

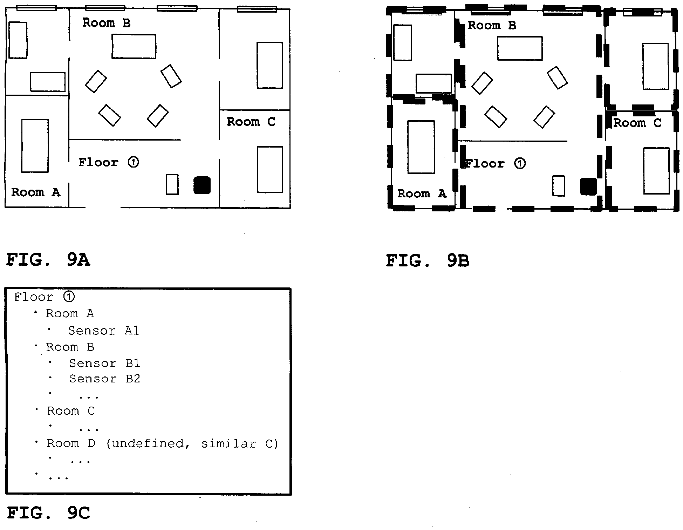

Optionally, the elements in data structure 500 can comprise tags (or labels, i.e. human readable identifications), the description will explain details in connection with FIGS. 9ABC. In case that the plane is a floor, the data structure can be provided for human inspection as a floor book or as a room book.

In the following, the description explains how such a data structure is obtained. For simplicity of explanation, description and figures refer to zones that are rooms in a floor (building 200, XY-plane). The principles are applicable for other zone definitions as well.

### (Obtaining the data structure)

FIG. 2 illustrates the image-to-data converter 100 ("converter" hereinafter) that is adapted to analyze technical devices in a building and to provide a data structure that corresponds to the location of particular devices in particular zones of the building and that has a format suitable for further processing by a computer (e.g., to let BAS 600 control building 200).

Converter 100 can be considered as an industrial engineering system, or an engineering tool that would be connected to such industrial engineering system. The figure illustrates converter 100 in a scenario with floor 210 of building 200, drawing 310, and image 410.

Building 200 has at least one floor 210 (i.e., XY-plane, horizontal plane). This floor can also be identified by number in a circle ①). Separators 212 and 214 separate floor 210 into rooms 211, 213 and 215. Separators 212 and 214 can be walls, doors or other elements. FIG. 2 is much simplified and illustrates separators 212 and 214 as intra-building walls that are arranged in parallel to the outer walls of the building.

Technical devices 221, 223, 225 (e.g., writing desks, or lamps) are located inside rooms 211, 213 and 215. The illustration is again simplified with only a single device per room. A particular device is assigned to a particular room by location: Device 221 is located in room 211, device 223 is located in room 213, and device 225 is located in room 215. The assignment by location is an illustrative example; persons of skill in the art understand that devices can be related to zones otherwise. For example, a fire alarm sound device (e.g., a siren) can be assigned to multiple rooms by its function to distribute sound across multiple rooms.

Drawing 310 represents floor 210 in a single plane (XY-plane, as view-from-above). Drawing 310 shows drawing lines 312 and 314 that represent separators (rooms) 212 and 214. Drawing lines are not necessarily straight lines (as in the figure), but they can be different. Drawing lines are usually standardized in representing standard elements of buildings. For example, floor plans usually show doors with their opening ranges as quarter circles. Stairs have a characteristic drawing pattern with parallel lines.

Drawing 310 also showing drawing symbols 321, 323, 325 (e.g., circles) that represent the technical devices 221, 223, 225. Drawings symbols are usually standardized in technical standards (e.g., Graphical symbols for diagrams - Part 11: Architectural and topographical installation plans and diagrams IEC 60617-11:1996).
As mentioned above, the drawing does not include electronic data that represents for the assignment. Drawing 310 can be scaled to building 200/floor 210 in a usual scale.

Image 410 is an image or picture. Image 410 has image lines 412 and 414 that correspond to drawings lines 312 and 314, and image symbols 421, 423, 425 correspond to drawing symbols 311, 313, 315, respectively. Image 310 is scaled to drawing 410, and image 310 has image coordinates X,Y (illustrated by example as x1, y1 for symbol 421 only). Image coordinates can be measured in pixels or otherwise, and the absolute values depend on the resolution (e.g., 300 dots per inch) of the image. In the example, image symbol 421 has coordinates x1, y1 that are within image line 412 and the image line of the outer wall. The technical device that is symbolized by symbol 321 (in the drawing) and by image symbol 421 (in the image) therefor is located inside zone (room) 211.

Image 410 can be an image in pixel raster format, can be an image with vector graphics, or can be a combination thereof. The description takes the pixel raster format as representative example.

Although drawing 310 and image 410 appear to be identical in the figure, the distinction is relevant. Image 410 is the electronic input to converter 100. Drawing 310 is considered to be incompatible with converter 100 and therefore not an input to converter 100. Drawing 310 can be a paper drawing, or can be a data structure in a CAD-system (not necessarily compatible to converter 100). There might even be situations where there is no drawing at all. Image 410 can be obtained by copying or photographing drawing 310, by converting the CAD data structure to pixel format, or otherwise.

Looking at the time, building 200 can be a building that already exists or can be building that will be being constructed in the future. For simplicity of illustration, it is assumed that floor 210 (in an existing building) has to be renovated by replacing luminaires, and that drawing 310 is an historical drawing available in paper only.

Turning to converter 100, it comprises receiver component 101, recognition component 102 and mapper component 103.

Receiver component 101 is adapted to receive image 410 (that is related to the plane 210 and that has having image lines 412, 414 corresponding to the separators 212, 214 and having image symbols 421, 423, 425 corresponding to the devices 221, 223, 225). Optionally, receiver component 101 can receive partial images and concatenate them. This is advantageous for example, if a large paper drawing (e.g., in DIN A2 format) has been scanned into a number of partial images (e.g., in DIN A4 format).

Recognition component 102 is adapted to identify the separators 212, 214 and the zones 211, 213, 215 by processing image lines 412, 414, to identify technical devices 221, 223, 225 by processing image symbols 421, 423, 425, and to identify the locations of zones 211, 213, 215 and technical devices 221, 223, 225 (represented by coordinates), also by processing lines and symbols.

Mapper component 103 is adapted to process the locations (by the coordinates xy) and to provide data structure 500 in the hierarchical arrangement (first layer 510 with first data elements representing particular zones 211, 212,213, and a second, sub-ordinated layer 520 with second data elements representing particular technical devices 221, 223, 225 that are located inside zones 211, 212, 213, and assignment indication from particular second data elements to particular first data elements).

As mentioned, data structure 500 comprises device data to control the building. The example of FIG. 2 focuses on assignment data. Image-to-data converter 100 can process intermediate data (such as the coordinates or pixel data of the images, or vector graphics) that is not (directly) used for controlling the building. However, image-to-data converter 100 can use such intermediate data for fine-tuning the data structure. Intermediate data can be included into the data structure optionally.

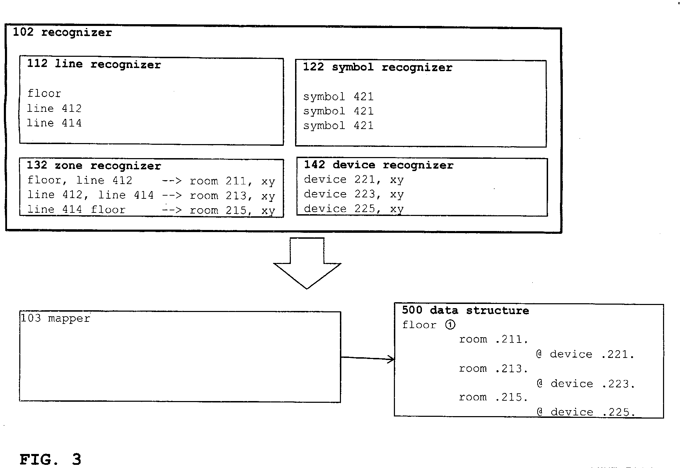

FIG. 3 illustrates image-to-data converter 100 with more details of recognition component 102. Line recognizer 112 is adapted to employ optical recognition techniques; and line recognizer 112 is adapted to recognize image lines 412, 414 including the coordinates of the image lines 412, 414. Zone recognizer 132 is adapted to process image lines 412, 414 and their coordinates the identify zones 211, 213, 215 of plane 210. Symbol recognizer 122 employs optical recognition techniques as well and is adapted to recognize image symbols 421, 423, 425 and their coordinates. Device recognizer 142 is adapted to process image symbols 412, 414 and to identify devices 221, 223, 225.

### (Modifying the data structure)

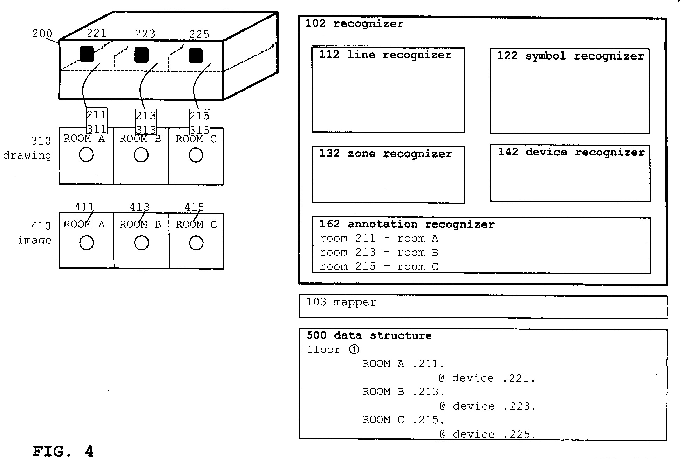

Referring to FIGS. 4-7, the description continues with details how converter 100 can modify data structure 500 by adding, deleting or changing elements. Modifying data structure 500 enhances the capability of BAS 600 to control building 200 more efficiently. For simplicity of illustration, the modification is explained as being performed by separate components or separate steps. However, the modification can be performed simultaneously with providing the data structure as described in connection with FIGS. 1-3.

### (Modifying, Annotations)

FIG. 4 illustrates further aspects of image-to-data converter 100, especially for processing images from drawings that include annotations for the rooms and/or for the technical devices. Recognition component 102 further comprises annotation recognizer 162 that is adapted to identify annotations 421, 423, 424 that are textual descriptors in image 410. Annotations 421, 423, 424 are associated with zones 211, 213, 215 or with devices 221, 223, 225 by coordinates. Mapper component 103 is adapted to include the textual descriptors, i.e., annotations 421, 423, 424 as labels into data structure 500.

As mentioned above in connection with FIG. 2, the drawing symbols (321, 323, 325) represent the technical devices 221, 223, 225. As in FIG. 4, there are further symbols. The person who prepared the drawing 310 (even years ago), has added the word "ROOM" and had added letters. Therefore, drawing 310 has symbol 311 "ROOM A", drawing symbol 313 "ROOM B", and drawing symbol 315 "ROOM C". The same principle applies to image 410 with image symbol 411 "ROOM A", image symbol 413 "ROOM B", and image symbol 415 "ROOM C".

In other words, if drawing 310 already has annotations for the rooms, the recognition component 102 can recognize such annotations in image 410 and can include the annotations into data structure 500 as labels.

Annotation recognizer 162 uses OCR (optical character recognition) techniques to recognize the characters for "ROOM A", "ROOM B" and "ROOM C". The image coordinates of symbols 411, 413 and 415 and the first data elements (previously provided) lead to an annotation-to-zone assignment: "ROOM A" is assigned to room 211, "ROOM B" to room 213 and "ROOM C" to room 215. Data structure 500 is modified. In the example of FIG. 4, annotation recognizer 162 has replaced labels "room" by the OCR-recognized wordings "ROOM A", "ROOM B", and "ROOM C".

Optionally, annotation recognizer 162 can receive annotations in digital form from another tool. For example, CAD-data can be exported into XML-data that partially contain annotations.

### (Modifying, Similarity)

According to the approach described in connection with FIGS. 1-4, BAS 600 can control building 200 provided that the sequence of representations (from the building to the drawings, from the drawings to the image, and from the image to the data structure) is complete. For reasons explained above and for other reasons, the reality may show a different picture. The drawings can be incomplete (devices, rooms, or annotations missing), the images likely inherit such incompleteness and the images may have further deficiencies.

To let BAS 600 control building 200 more efficiently, the accuracy of data structure 500 is improved by image-to-data converter 100 using similarity detection to modify data structure 500. Similarity can be detected for devices and zones in the building, as well as for lines and symbols (and annotations) in the drawings and images. Image-to-data converter 100 detects similarity in (i) at least some elements of data structure 500, or (ii) at least part of the data that is used to obtain the data structure (intermediate data). For the detection, image-to-data converter 100 uses pre-defined rules that reflect typical situations that can be observed in buildings, in drawings, and in images. The distinction into (i) and (ii) is related to the data requirement of the BAS to control the building. From a technical point of view, the data is available to image-to-data converter 100 in both cases.

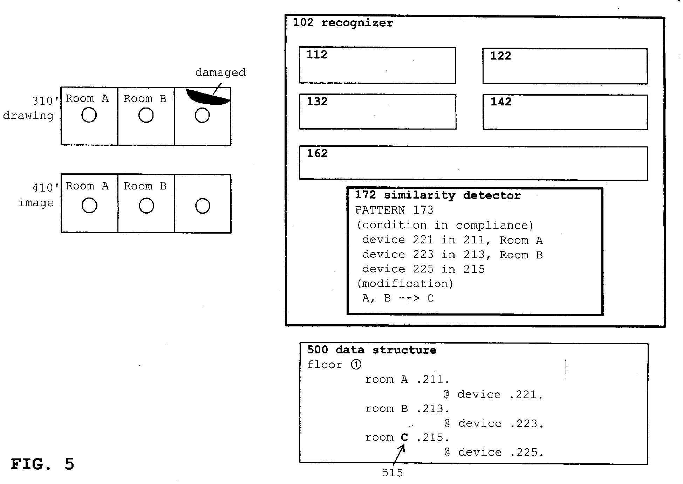

The description explains details by concentrating on a typical situation relating to the drawings and images in connection with FIG. 5 and on typical situations relating to the building.

FIG. 5 illustrates further aspects of image-to-data converter 100, especially, for processing images from drawings that are incomplete, or for processing images that are incomplete, so that similarity component 172 is used to complete missing annotations or other information.

Drawings can be in a physical state that makes it difficult to read them. For example, a paper drawing can be (at least partly) damaged by sun radiation over time, damaged by water or otherwise. In the example, drawing 310' comprises the drawing symbols for "Room A" and "Room B" but has a defect (e.g., on the upper right side). There is no indication of a "Room C". Since image 410' is a copy of drawing 310', there are image symbols for both rooms, but no image symbol for "Room C".

In a slightly different scenario, "Room C" is written on the drawing, but has lost contrast to be below an OCR-recognition threshold. There can be other reasons for OCR-non-compliance. For example, the original drawing might be correct in showing all details. As the image is a copy of the drawing, some regions of the drawings may be copied differently or incorrectly. As a consequence, the image lines may not correctly correspond to the drawing lines, or some image symbols may not correctly correspond to the drawings symbols. The phrase "not correctly corresponding" includes that something on the image is missing.

Similarity component 172 is an optional component of image-to-data converter 100. As illustrated, similarity component 172 can be part of recognizer component 102, but that is not required. Similarity component 172 processes data structure 500 to identify the correspondence of similarity pattern 173 to at least a sub-set of data elements and their assignment elements. The correspondence is determined according to predefined correspondence condition. Pattern 173 also includes a predefined rule for a predefined modification (i.e. a modification rule) if the correspondence condition is detected. Persons of skill in the art are able to define and store pattern 173 by using code in a computer program languages, or otherwise.

For explanation, pattern 173 is explained in plain words, together with short introductions to real-world situations. The situation is, however, not part of the pattern.

### (situation)

Rooms are equipped with devices of the same type that are labelled according to sequences or other conventions.

### (condition, to be detected in the data structure)

(a) In a sub-set of the data structure, device data elements represent devices having an equal type. AND
(b) In the sub-set, the device data elements are assigned to room data elements.
(c) In the sub-set, the room data elements have annotations in an incomplete sequence.

### (modification)

The data structure is modified - in the sub-set - by completing the sequence of annotations.

The pattern can also be described by referring to the devices and rooms (or zones in general) only.

In the particular example, the condition is complied with for data elements that represent the following situation: Device 221 is available in room 211, device 223 is available in room 213, and device 223 is available in room 215. Devices 221, 223 and 225 are of the same type (e.g., desks), and rooms 211 and 213 have annotations (identified as described in connection with FIG. 3, but incomplete). As a modification (or result), similarity component 172 causes converter 100 to provide label "Room C" to room 215 (in data structure 500).

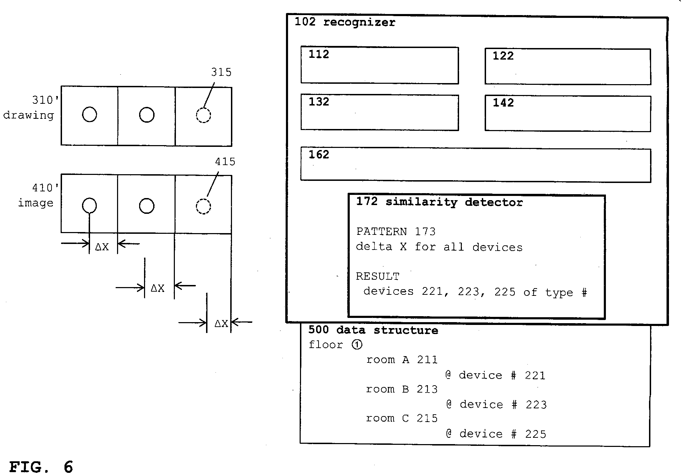

FIG. 6 illustrates further aspects of image-to-data converter 100, especially, for processing images from drawings that show symbols for devices in locations that can be related to the zones. In this example, the condition is detected in the data that is used to obtain the data structure. According to pattern 173, similarity component 172 can evaluate distances between image symbols, and/or can evaluate distances between image lines and image symbols.

Such distances indicate the arrangement of devices inside the zones. This can be advantageous in situations with original drawings in that a drawing symbol is missing (e.g., physical quality of an historic drawing, missing entry otherwise). As a result, a device can be identified that likely is related to a particular location with a particular probability. In the example, drawing symbol 315 and image symbol 415 are partly unreadable. Optical recognition techniques can identify the presence of image symbol 415 but not its type.

For example, as most rooms have a lighting device in the middle, the drawings (and images) have lighting symbols in the middle too. Unreadable pixels in the image can be related to light symbols at a given probability (e.g., 95%). In other words, this is like a sequence of (identical) devices for that a missing element is completed.

In a further example, desks and lamps can be located in the center of the room. Light switches are frequently located near the doors, the distance between door and switch is within a given tolerance band.

More in detail, FIG. 6 illustrates Δx as the distance between an image symbol and an image line. Δx can be measured by counting pixels. Δx is linearly related to the distance between a symbol and a line on the drawing (e.g. in millimeters) and also linearly related to the distance between a device and a wall (e.g., in meters). In the example, pattern 173 has the following conditions:
(a) Δx is within a particular tolerance band and substantially equal for all symbols and lines (i.e., between devices and wall)
   AND
(b) sixty (or more) percent of the image symbols stand for devices of the same type.

In view of the above-mentioned distinction into (i) and (ii), Δx can be intermediate data or can be stored in data structure, and the percentage can be derived from the data structure.

In the example, similarity component 172 evaluates the devices 221, 223 and 225 to have equal wall distance and devices 221 and 223 to be of the same type (type #, 2/3 > 60%). In the example, pattern 173 causes converter 100 to modify data structure 500 such that the data element that represents device 225 receives the same type (#) label.

Referring to FIGS. 5-6, similarity component 172 uses a predefined similarity pattern 173 with a pre-defined condition that is detected in the data structure or in intermediate data and with a pre-defined rule to modify data structure 500 by adding, deleting or changing elements.

As mentioned above, modifying the data structure according to pre-defined patterns (with conditions to be detected) increases the accuracy by that BAS 600 can control building 200. Further embodiments can be based on similarity patterns 173 for that the conditions and modification are described in the following examples:

### (Example 1)

**(situation)** Some of the devices are located in a distance to the separators that is equal, within a predefined tolerance band.
**(condition)** At least some location coordinates that represent the location of devices 221, 223 are equal - within a predefined tolerance band - in relation to location coordinates that represent the separators. This can be measured, for example, as Δx or otherwise.
**(modification)** Converter 100 can modify the data structure by equalizing the device types, for example, as explained in connection with FIG. 6.

### (Example 2)

**(situation)** For the plurality of devices 221, 223 located inside the plurality of zones 211, 213, a device type can be equal. For example, the devices are all desks.
**(condition)** At least some of the data elements that represent devices 221, 223 located inside the zones 211, 213 indicate that the devices have the same device type.
**(modification)** Converter 100 can provide annotations automatically, for annotations that are missing.

**(Example** 3)
**(situation)** For the plurality of devices 221, 223 located inside the plurality of zones 211, 213, the devices are of the same first type (e.g., all desks), and the corresponding rooms are of same second type (e.g., a room with two windows, one door). This pattern would identify a series of rooms that are equipped with devices substantially equally.
**(condition)** At least some of the data elements that represent devices 221, 223 and that represent zones 211, 213 to that the devices are assigned, indicate type equality so that the devices belong to the same first type and the rooms belong to the same second type.
**(modification)** Converter 100 can treat the rooms similarly, during further engineering. For example, lighting devices would be selected to be of the same type.

**(Example 4)**
**(situation)** The drawing has annotations 421, 423, 424 with a common portion. In the example, the annotations have the common term "ROOM".
**(condition)** At least some of the data elements that represent devices 221, 223 have annotations 421, 423, 424 with a common portion.
**(modification)** It was illustrated in connection with FIG. 5 that converter 100 modified data structure 500 to use similar labels for such rooms (e.g., letters A, B, C).

### (Example 5)

**(situation)** For the plurality of devices 221, 223 located inside the plurality of zones 211, 213, annotations 421, 423, 424 can follow a sequence (e.g., Room A, Room B, Room C).
**(condition)** At least some of the data elements that represent devices 221, 223 have annotations 421, 423, 424 that follow a sequence.
**(modification)** Converter 100 can continue with the sequence even if a data element is missing.

### (Example 6)

**(situation)** For the plurality of devices 221, 223, there are operational intra-device connections inside a sub-set of zones. For example, switch and sensors can be connected to light devices in many rooms. The operational connections can have symbols that are recognized from the drawing/image. For example, the devices are physically connected by wires.
**(condition)** At least some of the data elements that represent devices indicate physical intra-device connections inside the zones to that the devices are assigned to.
**(modification)** Detecting such a condition can lead to a modified data structure that includes representations of electrical or other connections between the devices even if the connections are not present on the drawing. A data structure that considers the connections is more suitable for BAS 600 to control the building.

### (Example 7)

**(situation)** For the plurality of devices 221, 223, there are functional intra-device connections inside a sub-set of zones. For example, chairs and desks are devices that are functionally connected. A chair allows a person to sit and to work on a desk. The device recognizer identifying a combination of chair and desk in proximity (e.g., within seating distance) provides a result that indicates compliance with a norm (e.g. CORRECT device combination); but the device recognizer identifying, for example, a chair and a refrigerator in the same proximity provides a result that indicates non-compliance (e.g., INCORRECT).
**(condition)** At least some of the data elements that represent devices indicate functional relations between devices inside the zones to that the devices are assigned to.
**(modification)** If such conditions are detected (e.g., functional mismatch), the data structure can be modified, for example, by removing an incorrect element, or element that leads to non-compliance. For example, the data element that represents the refrigerator would be removed.
**(further example)** If similarity component 172 identifies windows with shading devices (e.g., window blinds, or window shutters), the converter 100 can add data elements that symbolize motors and switches that are potentially to be installed as well.

### (Example 8)

Combinations of any of the previous pattern are possible to implement. This relates to the conditions and to the modifications separately. The person of skill in the art can expand items (1) to (7) into a matrix, for example, with conditions (1) to (7) in rows, and modifications (any number) in columns. For example, the modification to equalize the device types (same type for devices in the sub-set) can be applied for condition (1) (relative device location) OR for condition (4) common portion in the annotation), or even for (1) AND (4).

The approach is not limited to modify data structure 500 by adding, deleting or changing elements, but can be extended to providing a template for a new data structure. For example, some buildings have floors that are arranged similarly. A drawing of a particular first floor of the building can be evaluated into a data structure. Since a drawing for the second floor is not available, the data structure (of the first floor) can be used as a template for a data structure (of the second floor).

Further embodiments can improve the accuracy by that BAS 600 controls building 200 if similarity component 172 (and annotation recognizer 162) also processes predefined probabilities and likelihoods.

Probabilities can be implemented into pattern 173, into the conditions or the modifications. For example, if there is a window in the room, it is likely (e.g., 99% probability of the data structure modification) that the shading devices have to be installed. It is also likely, but with a different probability (e.g., 30%) that the shading device is driven by a motor.

Probabilities are not limited to pattern 173, but can also be considered in obtaining data structure 500 prior to modification, and can be considered to modify it. Converter 100 can use domain knowledge so that probabilities, for example, in correctly processing lines and symbols (from the drawings, and images) are increased. The domain knowledge differentiates drawing symbols so that symbols with higher probability are preferred over symbols with lower probability. A scenario for such an approach will be explained in the following for the domain of drawing symbols.

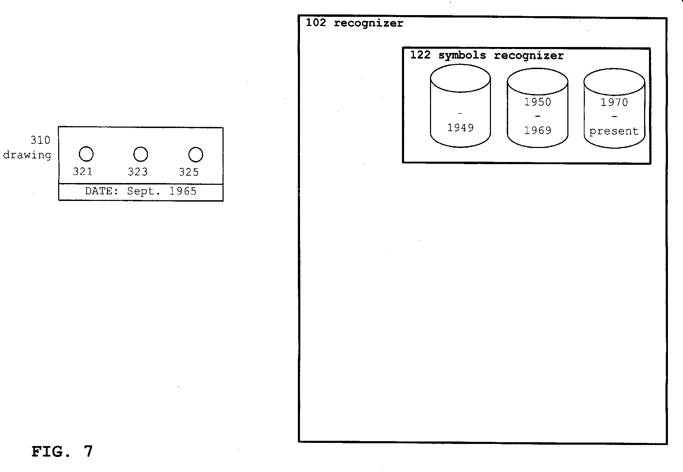

FIG. 7 illustrates further aspects of image-to-data converter 100, especially, for processing images from drawings that use symbols from an historic domain.

The drawings for the buildings can date from the historic time the building was actually constructed, often decades ago. Drawing symbols can be outdated. Much simplified, recognition probability decreases with the age of the drawing. For example, old drawings might symbolize electric lighting by the pictogram of a light bulb, but modern drawings might use an LED-symbol. To solve this problem (to compensate for potential misrecognition), the recognition component 102 receives a time indication of the drawing; the OCR uses domain knowledge for that historic time. Technical drawings usually carry a calendar date so that this time indication is available on the drawing and on the image. OCR-techniques to identify the date can be used as well. The exact calendar date is not required, but the year or the decade should be sufficient. For example, the recognition component 102 identifies the year "1965" as the year of the drawing, and selects an OCR-symbol library accordingly (e.g., selecting symbols from 1950-1969, ignoring symbols through 1949, and ignoring symbols from 1970). In other words, domain specific knowledge is used and the probability of obtaining a correct data structure is further improved.

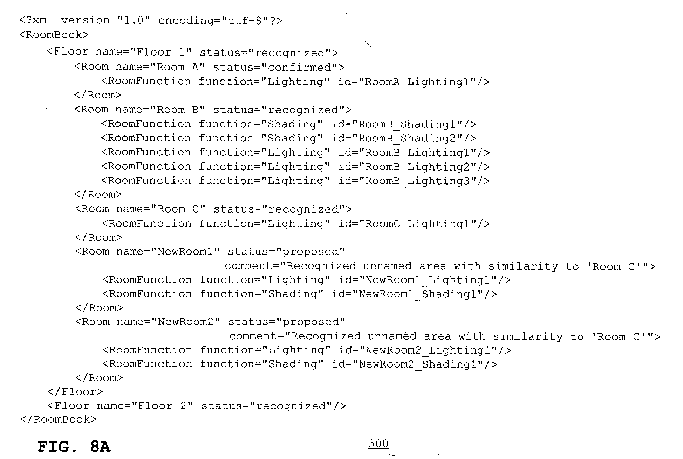

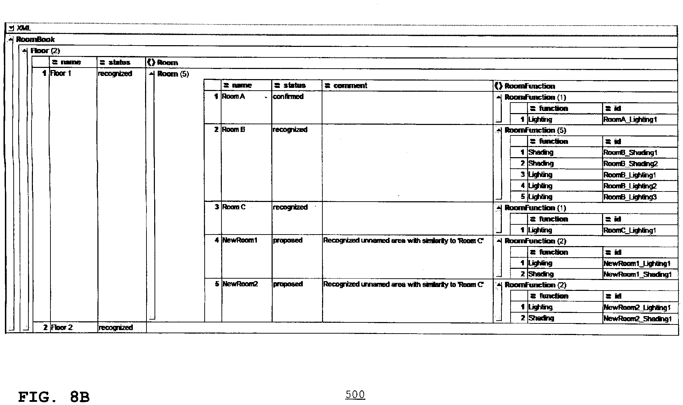

FIG. 8AB illustrate data structure 500 by way of example, in XML-format (FIG. 8A Extended Markup Language) and in a corresponding table view (FIG. 8B). The structure is a room book (cf. the corresponding start and stop tags). The structure has data elements in the first layer can be given as "<Room > </Room>", data elements in the second layer given as "<RoomFunction ...>", and the assignment given by inserting "<RoomFunction ...> "into "<Room >" and "</Room>". In the example, there is one device assigned to a room having the label "A", five devices are assigned to a room having the label "B", and so on. The semantics of the drawing symbols have been recognized to represent a lighting device in room A, two shading devices and three lighting devices in room B, and so on. BAS 600 can use such a data structure for controlling building 200.

Data elements that are provided by similarity component 172 can be indicated as "tentatively" for interaction with a user, for confirmation or rejection. In the example, there is a data element for a room that does not have a label yet (e.g., "NewRoom1"). This data element includes a status flag (e.g., "proposed"), or can include a user-made annotations (e.g., "comment").

As illustrated by the table view (FIG. 8B), the data structure can be shown in a different format in a user interface as a table. Tools to display XML-data in table or similar forms are commercially available, for example as XML-viewers.

Other formats for data structure 500 can be selected from the following: a textual BIM (Building Information Modeling) standard such as IFC (Industry Foundation Classes), aecXML (proposed by IFC), CIS/2 (a file format, approved by American Institute of Steel Construction, being the organization governing the standard) or others.

FIGS. 9A, 9B and 9C illustrate further examples for drawings and corresponding data structures. FIG. 9A illustrates a floor plan for floor ① with rooms A, B and C, and fourth and fifth rooms as image (cf. image 410). FIG. 9B illustrates the result of the activity of zone recognizer 132 (cf. FIG. 4) that has recognized image lines (e.g., lines with a certain thickness) and has processed them. Zone recognizer 132 has communicated the result to a user interface that shows the room separation by dashed lines. FIG. 9C illustrates that part of data structure 500 that is relevant for floor ①. Similarity component 172 has applied a condition (e.g., (5)) that identified sequence A, B and C and has applied the corresponding modification rule to add "D". FIG. 9C also illustrates that the label "D" is not yet taken over into the data structure. The modification is not performed automatically, but upon approval by the user of the BAS. FIG. 9C further illustrates a further hierarchy in the data structure: Room A has a sensor device.

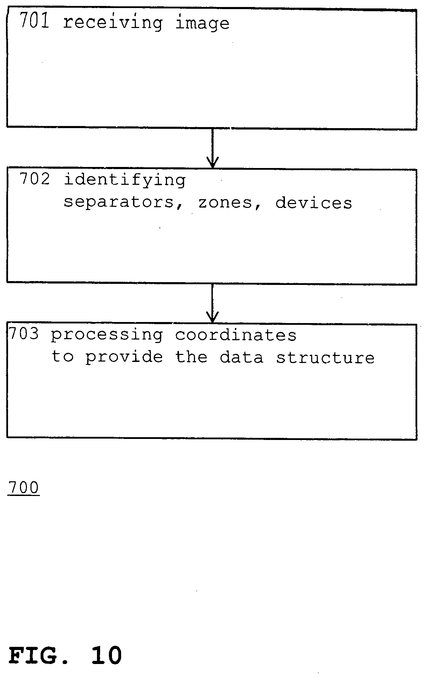

FIG. 10 illustrates a method flow chart diagram of method 700 for configuring building automation system (BAS). As explained above, the building has physical separators that divide a particular plane of the building into zones. The BAS is adapted to control the operation of technical devices by using a machine readable data structure that represents the zones within the building, the technical devices as well as device-to-zone assignments.

In receiving step 701, an image-to-data converter receives an image that is related to the plane. The image has image lines that correspond to the separators and has image symbols that correspond to the devices.

In identifying step 702, the converter identifies the separators and the zones by processing the image lines, and identifies the technical devices by processing the image symbols, as well as coordinates of the zones and of the technical devices.

In processing step 703, the converter processes the coordinates to provide the data structure in a hierarchical arrangement with at least a first layer (with first data elements representing the particular zones), and with at least a second, sub-ordinated layer (with second data elements representing the particular technical devices that are located inside the zones), and with assignment elements that indicates the device-to-zone assignments.

The description continues with explaining further aspects. The data structure and/or its portions (such as extracted annotations) can be forwarded to a user interface for further processing and/or verification by human operator. For example, taking over a value into the data structure (e.g., as label "C" for room 215) can depend on the acceptance by a user.

Also, the rules for identifying patterns and for using the pattern can include the calculation of metrics. For example, a fourth room would be the successor of the last available room ("Room C"), but the user interface could indicate to the user that (i) the fourth room is not annotated in the original drawing, (ii) the devices inside the fourth room are type-identical to the devices in room A, B and C, (iii) the devices are arranged differently (e.g., by a different distance to the wall, delta X) and (iv) a similarity value is calculated to be 90 per cent.

Merging data structures is possible: For example, there might be multiple drawings available for the same floor. The drawings may be specialized for different device types: a drawing for fire detectors, a drawing for the lamps, a drawing for the furniture and so on. The resulting data structure can include data elements that represent all device types.

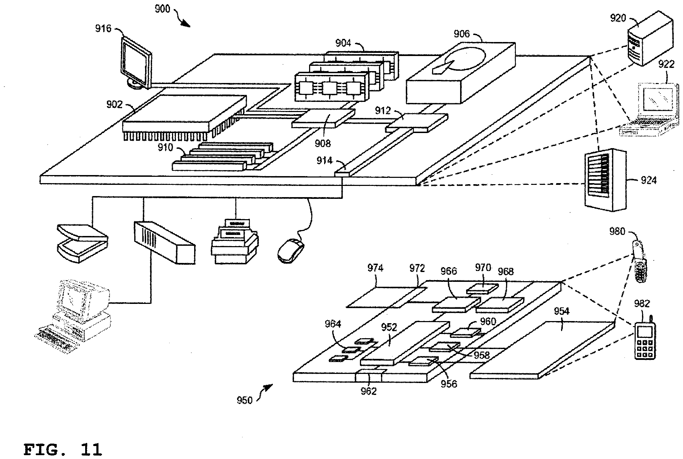

FIG. 11 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers.

Generic computing device may 900 correspond to the computer system explained above. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A building automation system (600) for a building (200) with physical separators (212, 214) that divide a particular plane (210) of the building (200) into zones (211, 213, 215), the building automation system (600) being adapted to use a data structure (500) that represents zones (211, 213, 215) and technical devices (221, 223, 225) within the building, and that represents device-to-zone assignments (221/211, 223/213, 225/215), the building automation system (600) further being adapted to control the operation of the technical devices (221, 223, 225) in the building by processing the data structure (500), wherein the building automation system (600) comprises an image-to-data converter (100) which is adapted to obtain the data structure (500), the image-to-data converter (100) comprising:
a receiver component (101) that is adapted to receive an image (410) that is related to the plane (210), the image (410) having image lines (412, 414) corresponding to the separators (212, 214) and having image symbols (421, 423, 425) corresponding to the devices (221, 223, 225);
a recognition component (102) that is adapted to identify
- the separators (212, 214) and the zones (211, 213, 215) by processing the image lines (412, 414),
- the technical devices (221, 223, 225) by processing the image symbols (421, 423, 425),
- coordinates (xy) of the zones (211, 213, 215) and the technical devices (221, 223, 225);
a mapper component (103) that is adapted to process the coordinates (xy) and to provide the data structure (500) in an hierarchical arrangement with at least a first layer (510) with first data elements representing the particular zones (211, 212,213), and at least a second, sub-ordinated layer (520) with second data elements representing the particular technical devices (221, 223, 225) that are located inside the zones (211, 212, 213), and assignment elements (515) representing the device-to-zone-assignments and
the recognition component (102) in the image-to-data converter (100) comprises:
a line recognizer (112) that employs optical recognition techniques, adapted to recognize image lines (412, 414) including coordinates of the image lines (412, 414);
a zone recognizer (132) adapted to process the image lines (412, 414) and their coordinates the identify the zones (211, 213, 215) of the plane (210);
a symbol recognizer (122) that employs optical recognition techniques, adapted to recognize image symbols (421, 423, 425) and their coordinates; and
a device recognizer (142) adapted to process the image symbols (412, 414) and to identify the devices (221, 223, 225).

2. The building automation system (600) according to claim 1, wherein in the image-to-data converter (100), the recognition component (102) further comprises an annotation recognizer (162) adapted to identify annotations (421, 423, 424) being textual descriptors in the image (410), wherein the annotations (421, 423, 424) are associated with the zones (211, 213, 215) or with the devices (221, 223, 225) by coordinates; and wherein the mapper component (103) is adapted to include the annotations (421, 423, 424) as labels into the data structure (500).

3. The building automation system (600) according to any of claims 1 or 2, wherein the image-to-data converter (100) further comprises a similarity component (172) that is adapted to use a predefined similarity pattern (173) with a pre-defined condition and with a pre-defined rule to modify the data structure (500) by adding, deleting or changing elements.

4. The building automation system (600) according to any of claims 1 to 3, wherein the similarity component (172) is adapted to detect the pre-defined condition in the data structure (500) or intermediate data.

5. The building automation system (600) according to any of claims 1 to 4, wherein the similarity component (172) is adapted to detect the pre-defined condition as selected from the following:
(1) at least some location coordinates that represent the location of devices (221, 223) are equal - within a predefined tolerance band - in relation to location coordinates that represent the separators (212, 214);
(2) at least some of the data elements that represent devices (221, 223) located inside the zones (211, 213), indicate that the devices have the same device type;
(3) at least some of the data elements that represent devices (221, 223) and that represent zones (211, 213) to that the devices are assigned, indicate type equality so that the device belong to the same first type and the rooms belong to the same second type;
(4) at least some of the data elements that represent devices (221, 223) have annotations (421, 423, 424) with a common portion;
(5) at least some of the data elements that represent devices (221, 223) have annotations (421, 423, 424) that follow a sequence;
(6) at least some of the data elements that represent devices indicate physical intra-device connections inside the zones to that the devices are assigned to;
(7) at least some of the data elements that represent devices indicate functional relations between devices inside the zones to that the devices are assigned to; and
(8) a combination of any of the conditions.

6. The building automation system (600) according to any of claims 3-5, wherein the image-to-structure converter (100) is adapted to modify a data structure element (525) of the data structure (500) by applying a modification rule that is related to the condition.

7. The building automation system (600) according to any of claims 3-6, adapted to use that similarity pattern (173) to provide a data structure template.

8. The building automation system (600) according to any of claims 1-6, wherein the recognition component (102) uses optical recognition techniques that are adaptive to the time the drawing (310) was made.

9. The building automation system (600) according to any of claims 1-7, wherein the optical recognition techniques are optical character recognition techniques and optical image recognition techniques.

10. A method (700) for configuring a building automation system (600) for a building (200) with physical separators (212, 214) that divide a particular plane (210) of the building (200) into zones (211, 213, 215), the building automation system (600) being adapted to control the operation of the technical devices (221, 223, 225) by using a machine readable data structure (500) that represents zones (211, 213, 215) within the building, technical devices (221, 223, 225) and device-to-zone assignments (221/211, 223/213, 225/215), the method (700) comprising:
receiving (701) an image (410) that is related to the plane (210), the image (410) having image lines (412, 414) corresponding to the separators (212, 214) and having image symbols (421, 423, 425) corresponding to the devices (221, 223, 225);
identifying (702) the separators (212, 214) and the zones (211, 213, 215) by processing the image lines (412, 414), the technical devices (221, 223, 225) by processing the image symbols (421, 423, 425), as well as coordinates (xy) of the zones (211, 213, 215) and of the technical devices (221, 223, 225);
processing (703) the coordinates (xy) to provide the data structure (500) in an hierarchical arrangement with at least a first layer (510) with first data elements representing the particular zones (211, 212,213), and at least a second, sub-ordinated layer (520) with second data elements representing the particular technical devices (221, 223, 225) that are located inside the zones (211, 212, 213), and assignment elements (515) indicating the device-to-zone assignments;
identifying (702) the separators comprises:
recognizing image lines (412, 414) including coordinates of the image lines (412, 414) by a line recognizer (112) that employs optical recognition techniques;
recognizing zones (211, 213, 215) of the plane (210) by processing the image lines (412, 414) and their coordinates;
recognizing image symbols (421, 423, 425) and their coordinates by a symbol recognizer (122) that employs optical recognition techniques;
recognizing and identifying the devices (221, 223, 225) by processing the image symbols (412,414).

11. The method according to claim 10, further comprising: identifying annotations (421, 423, 424) being textual descriptors in the image (410), wherein the annotations (421, 423, 424) are associated with the zones (211, 213, 215) or with the devices (221, 223, 225) by coordinates; and including the annotations (421, 423, 424) as labels into the data structure (500).

12. The method according to claim 11, further comprising: using detecting a pre-defined condition in the data structure (500) or in intermediate data, and modifying the data structure (500) by adding, deleting or changing elements according to a pre-defined rule that is related to the pre-defined condition.

## Patentansprüche

1. Gebäudeautomationssystem (600) für ein Gebäude (200) mit physischen Trennwänden (212, 214), die eine jeweilige Ebene (210) des Gebäudes (200) in Zonen (211, 213, 215) einteilen, wobei das Gebäudeautomationssystem (600) zum Verwenden einer Datenstruktur (500) ausgelegt ist, welche Zonen (211, 213, 215) und technische Vorrichtungen (221, 223, 225) innerhalb des Gebäudes darstellt und welche Vorrichtung-zu-Zone-Zuweisungen (221/211, 223/213, 225/215) darstellt, wobei das Gebäudeautomationssystem (600) ferner zum Steuern des Betriebs der technischen Vorrichtungen (221, 223, 225) im Gebäude durch Verarbeiten der Datenstruktur (500) ausgelegt ist, wobei das Gebäudeautomationssystem (600) einen Bild-Daten-Wandler (100) umfasst, der zum Erhalten der Datenstruktur (500) ausgelegt ist, wobei der Bild-Daten-Wandler (100) umfasst:
eine Empfängerkomponente (101), die zum Empfangen eines Bildes (410) ausgelegt ist, das mit der Ebene (210) in Beziehung steht, wobei das Bild (410) Bildlinien (412, 414) aufweist, die den Trennwänden (212, 214) entsprechen, und Bildsymbole (421, 423, 425) aufweist, die den Vorrichtungen (221, 223, 225) entsprechen;
eine Erkennungskomponente (102), die so ausgelegt ist, dass sie Folgendes identifiziert:
- die Trennwände (212, 214) und die Zonen (211, 213, 215) durch Verarbeiten der Bildlinien (412, 414),
- die technischen Vorrichtungen (221, 223, 225) durch Verarbeiten der Bildsymbole (421, 423, 425),
- Koordinaten (xy) der Zonen (211, 213, 215) und der technischen Vorrichtungen (221, 223, 225);
eine Mapper-Komponente (103), die so ausgelegt ist, dass sie die Koordinaten (xy) verarbeitet und die Datenstruktur (500) in einer hierarchischen Anordnung mit mindestens einer ersten Schicht (510) mit ersten Datenelementen, die jeweilige Zonen (211, 212, 213) darstellen, und mindestens einer zweiten, untergeordneten Schicht (520) mit zweiten Datenelementen, welche die jeweiligen technischen Vorrichtungen (221, 223, 225) darstellen, die innerhalb der Zonen (211, 212, 213) angeordnet sind, und Zuweisungselementen (515) bereitstellt, welche die Vorrichtung-zu-Zone-Zuweisungen darstellen; und
wobei die Erkennungskomponente (102) im Bild-Daten-Wandler (100) umfasst:
eine Linienerkennungseinrichtung (112), die optische Erkennungstechniken einsetzt und so ausgelegt ist, dass sie Bildlinien (412, 414), einschließlich der Koordinaten der Bildlinien (412, 414), erkennt;
eine Zonenerkennungseinrichtung (132), die so ausgelegt ist, dass sie die Bildlinien (412, 414) und ihre Koordinaten verarbeitet, um die Zonen (211, 213, 215) der Ebene (210) zu identifizieren;
eine Symbolerkennungseinrichtung (122), die optische Erkennungstechniken einsetzt und zum Erkennen von Bildsymbolen (421, 423, 425) und ihren Koordinaten ausgelegt ist; und
eine Vorrichtungserkennungseinrichtung (142), die zum Verarbeiten der Bildsymbole (412, 414) und zum Identifizieren der Vorrichtungen (221, 223, 225) ausgelegt ist.

2. Gebäudeautomationssystem (600) nach Anspruch 1, wobei im Bild-Daten-Wandler (100) die Erkennungskomponente (102) ferner eine Annotationserkennungseinrichtung (162) umfasst, die zum Erkennen von Annotationen (421, 423, 424) ausgelegt ist, wobei es sich um Text-Deskriptoren im Bild (410) handelt, wobei die Annotationen (421, 423, 424) durch Koordinaten mit den Zonen (211, 213, 215) oder mit den Vorrichtungen (221, 223, 225) assoziiert sind; und wobei die Mapper-Komponente (103) so ausgelegt ist, dass sie die Annotationen (421, 423, 424) als Etiketten in die Datenstruktur (500) einbezieht.

3. Gebäudeautomationssystem (600) nach einem der Ansprüche 1 oder 2, wobei der Bild-Daten-Wandler (100) ferner eine Ähnlichkeitskomponente (172) umfasst, die so ausgelegt ist, dass sie ein vordefiniertes Ähnlichkeitsmuster (173) mit einer vordefinierten Bedingung und mit einer vordefinierten Regel verwendet, um die Datenstruktur (500) durch Hinzufügen, Löschen oder Ändern von Elementen zu modifizieren.

4. Gebäudeautomationssystem (600) nach einem der Ansprüche 1 bis 3, wobei die Ähnlichkeitskomponente (172) zum Detektieren der vordefinierten Bedingung in der Datenstruktur (500) oder Zwischendaten ausgelegt ist.

5. Gebäudeautomationssystem (600) nach einem der Ansprüche 1 bis 4, wobei die Ähnlichkeitskomponente (172) so ausgelegt ist, dass sie die vordefinierte Bedingung detektiert, wie aus folgenden ausgewählt:
(1) wenigstens einige Positionskoordinaten, welche die Position von Vorrichtungen (221, 223) darstellen, sind - innerhalb eines vordefinierten Toleranzbandes - gleich in Bezug auf Positionskoordinaten, welche die Trennwände (212, 214) darstellen;
(2) wenigstens einige der Datenelemente, welche Vorrichtungen (221, 223) darstellen, die innerhalb der Zonen (211, 213) angeordnet sind, geben an, dass die Vorrichtungen den gleichen Vorrichtungstyp aufweisen;
(3) wenigstens einige der Datenelemente, welche Vorrichtungen (221, 223) darstellen und welche Zonen (211, 213) darstellen, zu welchen die Vorrichtungen zugewiesen sind, geben Typgleichheit an, so dass die Vorrichtungen zum gleichen ersten Typ gehören, und die Räume zum gleichen zweiten Typ gehören;
(4) wenigstens einige der Datenelemente, welche Vorrichtungen (221, 223) darstellen, weisen Annotationen (421, 423, 424) mit einem gemeinsamen Teil auf;
(5) wenigstens einige der Datenelemente, welche Vorrichtungen (221, 223) darstellen, weisen Annotationen (421, 423, 424) auf, die einer Sequenz folgen;
(6) wenigstens einige der Datenelemente, welche Vorrichtungen darstellen, geben physische vorrichtungsinterne Verbindungen innerhalb der den Zonen an, zu welchen die Vorrichtungen zugewiesen sind;
(7) wenigstens einige der Datenelemente, welche Vorrichtungen darstellen, geben funktionelle Beziehungen zwischen Vorrichtungen innerhalb der Zonen an, zu welchen die Vorrichtungen zugewiesen sind; und
(8) eine Kombination beliebiger dieser Bedingungen.

6. Gebäudeautomationssystem (600) nach einem der Ansprüche 3 bis 5, wobei der Bild-Daten-Wandler (100) so ausgelegt ist, dass er ein Datenstrukturelement (525) der Datenstruktur (500) durch Anwenden einer Modifikationsregel modifiziert, die mit der Bedingung in Beziehung steht.

7. Gebäudeautomationssystem (600) nach einem der Ansprüche 3 bis 6, ausgelegt, um dieses Ähnlichkeitsmuster (173) zum Bereitstellen einer Datenstrukturvorlage zu verwenden.

8. Gebäudeautomationssystem (600) nach einem der Ansprüche 1 bis 6, wobei die Erkennungskomponente (102) optische Erkennungstechniken verwendet, die an die Zeit, zu der die Zeichnung (310) angefertigt wurde, angepasst werden können.

9. Gebäudeautomationssystem (600) nach einem der Ansprüche 1 bis 7, wobei die optischen Erkennungstechniken optische Zeichenerkennungstechniken und optische Bilderkennungstechniken sind.

10. Verfahren (700) zum Konfigurieren eines Gebäudeautomationssystems (600) für ein Gebäude (200) mit physischen Trennwänden (212, 214), die eine jeweilige Ebene (210) des Gebäudes (200) in Zonen (211, 213, 215) einteilen, wobei das Gebäudeautomationssystem (600) so ausgelegt ist, dass es den Betrieb der technischen Vorrichtungen (221, 223, 225) durch Verwenden einer maschinenlesbaren Datenstruktur (500) steuert, die Zonen (211, 213, 215) innerhalb des Gebäudes, technische Vorrichtungen (221, 223, 225) und Vorrichtung-zu-Zone-Zuweisungen (221/211, 223/213, 225/215) darstellt, wobei das Verfahren (700) umfasst:
Empfangen (701) eines Bildes (410), das mit der Ebene (210) in Beziehung steht, wobei das Bild (410) Bildlinien (412, 414) aufweist, die den Trennwänden (212, 214) entsprechen, und Bildsymbole (421, 423, 425) aufweist, die den Vorrichtungen (221, 223, 225) entsprechen;
Identifizieren (702) der Trennwände (212, 214) und der Zonen (211, 213, 215) durch Verarbeiten der Bildlinien (412, 414), der technischen Vorrichtungen (221, 223, 225) durch Verarbeiten der Bildsymbole (421, 423, 425) sowie von Koordinaten (xy) der Zonen (211, 213, 215) und der technischen Vorrichtungen (221, 223, 225);
Verarbeiten (703) der Koordinaten (xy) zum Bereitstellen der Datenstruktur (500) in einer hierarchischen Anordnung mit mindestens einer ersten Schicht (510) mit ersten Datenelementen, die jeweilige Zonen (211, 212, 213) darstellen, und mindestens einer zweiten, untergeordneten Schicht (520) mit zweiten Datenelementen, welche die jeweiligen technischen Vorrichtungen (221, 223, 225) darstellen, die innerhalb der Zonen (211, 212, 213) angeordnet sind, und Zuweisungselementen (515), welche die Vorrichtung-zu-Zone-Zuweisungen angeben;
wobei das Identifizieren (702) der Trennwände umfasst:
Erkennen von Bildlinien (412, 414), einschließlich der Koordinaten der Bildlinien, (412, 414), durch eine Linienerkennungseinrichtung (112), welche optische Erkennungstechniken einsetzt;
Erkennen von Zonen (211, 213, 215) der Ebene (210) durch Verarbeiten der Bildlinien (412, 414) und ihrer Koordinaten;
Erkennen von Bildsymbolen (421, 423, 425) und ihren Koordinaten durch eine Symbolerkennungseinrichtung (122), welche optische Erkennungstechniken einsetzt;
Erkennen und Identifizieren der Vorrichtungen (221, 223, 225) durch Verarbeiten der Bildsymbole (412, 414).

11. Verfahren nach Anspruch 10, ferner umfassend: Identifizieren von Annotationen (421, 423, 424), wobei es sich um Text-Deskriptoren im Bild (410) handelt, wobei die Annotationen (421, 423, 424) durch Koordinaten mit den Zonen (211, 213, 215) oder mit den Vorrichtungen (221, 223, 225) assoziiert sind; und Einbeziehen der Annotationen (421, 423, 424) als Etiketten in die Datenstruktur (500).

12. Verfahren nach Anspruch 11, ferner umfassend: Verwenden des Detektierens einer vordefinierten Bedingung in der Datenstruktur (500) oder in Zwischendaten und Modifizieren der Datenstruktur (500) durch Hinzufügen, Löschen oder Ändern von Elementen gemäß einer vordefinierten Regel, die mit der vordefinierten Bedingung in Beziehung steht.

## Revendications

1. Système d'automatisation de bâtiment (600) pour un bâtiment (200) avec des séparateurs physiques (212, 214) qui divisent un plan particulier (210) du bâtiment (200) en zones (211, 213, 215), le système d'automatisation de bâtiment (600) étant adapté pour utiliser une structure de données (500) qui représente des zones (211, 213, 215) et des dispositifs techniques (221, 223, 225) à l'intérieur du bâtiment, et qui représente des affectations de dispositif à zone (221/211, 223/213, 225/215), le système d'automatisation de bâtiment (600) étant en outre adapté pour commander le fonctionnement des dispositifs techniques (221, 223, 225) dans le bâtiment en traitant la structure de données (500), le système d'automatisation de bâtiment (600) comprenant un convertisseur d'images en données (100) qui est adapté pour obtenir la structure de données (500), le convertisseur d'images en données (100) comprenant : un composant de réception (101) qui est adapté pour recevoir une image (410) qui est liée au plan (210), l'image (410) ayant des lignes d'image (412, 414) correspondant aux séparateurs (212, 214) et ayant des symboles d'image (421, 423, 425) correspondant aux dispositifs (221, 223, 225) ;
un composant de reconnaissance (102) qui est adapté pour identifier :
- les séparateurs (212, 214) et les zones (211, 213, 215) en traitant les lignes d'image (412, 414),
- les dispositifs techniques (221, 223, 225) en traitant les symboles d'image (421, 423, 425),
- les coordonnées (xy) des zones (211, 213, 215) et des dispositifs techniques (221, 223, 225) ;
un composant de cartographie (103) qui est adapté pour traiter les coordonnées (xy) et pour fournir la structure de données (500) dans un agencement hiérarchique avec au moins une première couche (510) avec des premiers éléments de données représentant les zones particulières (211, 212, 213), et au moins une deuxième couche subordonnée (520) avec des deuxièmes éléments de données représentant les dispositifs techniques particuliers (221, 223, 225) qui sont situés à l'intérieur des zones (211, 212, 213), et des éléments d'affectation (515) représentant les affectations de dispositif à zone, et
la composante de reconnaissance (102) dans le convertisseur d'images en données (100) comprenant :
un dispositif de reconnaissance de lignes (112) qui utilise des techniques de reconnaissance optique, adapté pour reconnaître des lignes d'image (412, 414), comprenant des coordonnées des lignes d'image (412, 414) ;
un dispositif de reconnaissance de zone (132) adapté pour traiter les lignes d'image (412, 414) et leurs coordonnées pour identifier les zones (211, 213, 215) du plan (210) ;
un dispositif de reconnaissance de symboles (122) qui utilise des techniques de reconnaissance optique, adapté pour reconnaître des symboles d'image (421, 423, 425) et leurs coordonnées ; et
un dispositif de reconnaissance de dispositifs (142) adapté pour traiter les symboles d'image (412, 414) et pour identifier les dispositifs (221, 223, 225).

2. Système d'automatisation de bâtiment (600) selon la revendication 1, dans le convertisseur d'images en données (100), le composant de reconnaissance (102) comprenant en outre un dispositif de reconnaissance d'annotations (162) adapté pour identifier des annotations (421, 423, 424) qui sont des descripteurs textuels dans l'image (410), les annotations (421, 423, 424) étant associées aux zones (211, 213, 215) ou aux dispositifs (221, 223, 225) par des coordonnées ; et le composant de cartographie (103) étant adapté pour inclure les annotations (421, 423, 424) sous forme d'étiquettes dans la structure de données (500).

3. Système d'automatisation de bâtiment (600) selon l'une quelconque des revendications 1 ou 2, le convertisseur d'images en données (100) comprenant en outre un composant de similarité (172) qui est adapté pour utiliser un modèle de similarité prédéfini (173) avec une condition prédéfinie et avec une règle prédéfinie pour modifier la structure de données (500) en ajoutant, supprimant ou changeant des éléments.

4. Système d'automatisation de bâtiment (600) selon l'une quelconque des revendications 1 à 3, le composant de similarité (172) étant adapté pour détecter la condition prédéfinie dans la structure de données (500) ou les données intermédiaires.

5. Système d'automatisation de bâtiment (600) selon l'une quelconque des revendications 1 à 4, le composant de similarité (172) étant adapté pour détecter la condition prédéfinie telle que choisie parmi les suivantes :
(1) au moins certaines coordonnées de localisation qui représentent l'emplacement des dispositifs (221, 223) étant égales, dans une bande de tolérance prédéfinie, par rapport aux coordonnées de localisation qui représentent les séparateurs (212, 214) ;
(2) au moins certains des éléments de données qui représentent les dispositifs (221, 223) situés à l'intérieur des zones (211, 213), indiquant que les dispositifs ont le même type de dispositif ;
(3) au moins certains des éléments de données qui représentent des dispositifs (221, 223) et qui représentent des zones (211, 213) auxquelles les dispositifs sont affectés, indiquant une égalité de type de sorte que les dispositifs appartiennent au même premier type et les pièces appartiennent au même deuxième type ;
(4) au moins certains des éléments de données qui représentent des dispositifs (221, 223) ayant des annotations (421, 423, 424) avec une partie commune ;
(5) au moins certains des éléments de données qui représentent des dispositifs (221, 223) ayant des annotations (421, 423, 424) qui suivent une séquence ;
(6) au moins certains des éléments de données qui représentent des dispositifs indiquant des connexions physiques intra-dispositif à l'intérieur des zones auxquelles les dispositifs sont affectés ;
(7) au moins certains des éléments de données qui représentent des dispositifs indiquant des relations fonctionnelles entre les dispositifs à l'intérieur des zones auxquelles les dispositifs sont affectés ; et
(8) une combinaison de n'importe quelles des conditions.

6. Système d'automatisation de bâtiment (600) selon l'une quelconque des revendications 3 à 5, le convertisseur d'image en structure (100) étant adapté pour modifier un élément de structure de données (525) de la structure de données (500) en appliquant une règle de modification qui est liée à la condition.

7. Système d'automatisation de bâtiment (600) selon l'une quelconque des revendications 3 à 6, adapté pour utiliser ce modèle de similarité (173) pour fournir un modèle de structure de données.

8. Système d'automatisation de bâtiment (600) selon l'une quelconque des revendications 1 à 6, le composant de reconnaissance (102) utilisant des techniques de reconnaissance optique qui sont adaptatives au moment où le dessin (310) a été fait.

9. Système d'automatisation de bâtiment (600) selon l'une quelconque des revendications 1 à 7, les techniques de reconnaissance optique étant des techniques de reconnaissance optique de caractères et des techniques de reconnaissance optique d'images.

10. Procédé (700) pour configurer un système d'automatisation de bâtiment (600) pour un bâtiment (200) avec des séparateurs physiques (212, 214) qui divisent un plan particulier (210) du bâtiment (200) en zones (211, 213, 215), le système d'automatisation de bâtiment (600) étant adapté pour commander le fonctionnement des dispositifs techniques (221, 223, 225) en utilisant une structure de données lisible par machine (500) qui représente des zones (211, 213, 215) à l'intérieur du bâtiment, des dispositifs techniques (221, 223, 225) et des affectations de dispositif à zone (221/211, 223/213, 225/215), le procédé (700) comprenant :
la réception (701) d'une image (410) qui est liée au plan (210), l'image (410) ayant des lignes d'image (412, 414) correspondant aux séparateurs (212, 214) et ayant des symboles d'image (421, 423, 425) correspondant aux dispositifs (221, 223, 225) ;
l'identification (702) des séparateurs (212, 214) et des zones (211, 213, 215) par le traitement des lignes d'image (412, 414), les dispositifs techniques (221, 223, 225) par le traitement des symboles d'image (421, 423, 425), ainsi que les coordonnées (xy) des zones (211, 213, 215) et des dispositifs techniques (221, 223, 225) ;
le traitement (703) des coordonnées (xy) pour fournir la structure de données (500) dans un agencement hiérarchique avec au moins une première couche (510) avec des premiers éléments de données représentant les zones particulières (211, 212, 213), et au moins une deuxième couche subordonnée (520) avec des deuxièmes éléments de données représentant les dispositifs techniques particuliers (221, 223, 225) qui sont situés à l'intérieur des zones (211, 212, 213), et des éléments d'affectation (515) indiquant les affectations de dispositif à zone ;
l'identification (702) des séparateurs comprenant :
la reconnaissance de lignes d'image (412, 414), comprenant des coordonnées des lignes d'image (412, 414), par un dispositif de reconnaissance de ligne (112) qui utilise des techniques de reconnaissance optique ;
la reconnaissance de zones (211, 213, 215) du plan (210) par le traitement des lignes d'image (412, 414) et de leurs coordonnées ;
la reconnaissance de symboles d'image (421, 423, 425) et de leurs coordonnées par un dispositif de reconnaissance de symboles (122) qui utilise des techniques de reconnaissance optique ;
la reconnaissance et l'identification des dispositifs (221, 223, 225) par le traitement des symboles d'image (412, 414).

11. Procédé selon la revendication 10, comprenant en outre : l'identification d'annotations (421, 423, 424) qui sont des descripteurs textuels dans l'image (410), les annotations (421, 423, 424) étant associées aux zones (211, 213, 215) ou aux dispositifs (221, 223, 225) par des coordonnées ; et l'inclusion des annotations (421, 423, 424) sous forme d'étiquettes dans la structure de données (500).

12. Procédé selon la revendication 11, comprenant en outre : l'utilisation de la détection d'une condition prédéfinie dans la structure de données (500) ou dans des données intermédiaires, et la modification de la structure de données (500) en ajoutant, supprimant ou changeant des éléments selon une règle prédéfinie qui est liée à la condition prédéfinie.
